# EUROPEAN PATENT APPLICATION

(11) **EP 4 386 416 A1**
(43) Date of publication of application: **19.06.2024**
(21) Application number: 22214030.3
(22) Date of filing: 16.12.2022
(51) Int. Cl.: G01S 1/04, G01S 5/00, G01S 5/02

(54) **SYSTEMS AND METHODS FOR DETERMINING LOCATIONS OF ASSETS**

(71) Applicant: Koninklijke Philips N.V., 5656 AG Eindhoven (NL)
(72) Inventor: BHOWMICK, Anubrata, Eindhoven (NL); CHATTERJEA, Supriyo, Eindhoven (NL)
(74) Representative: Philips Intellectual Property & Standards

(57) **Abstract**

A computer implemented method (200) for use in determining locations of assets in a building of a medical setting comprises a first step of i) tracking (202) locations of the asset in the building over time using locations obtained using a first asset location method. In a second step the method comprises ii) determining (204) to use a second asset location method in a first region of a first storey of the building to locate the asset, if the tracked locations according to the first asset location method indicate that the asset is moving between the first storey of the building and one or more other storeys of the building at a rate higher than a first threshold rate in a second region of the first storey of the building

## Description

### FIELD OF THE INVENTION

Embodiments herein relate to locating assets. Particularly but non-exclusively, embodiments herein relate to determining locations of assets in a building having a medical setting.

### BACKGROUND OF THE INVENTION

This disclosure lies in the area of hospital resource management; and more generally to managing resources in medical and/or care-giving settings.

Hospitals can use Wi-Fi based real-time locating systems (RTLS) to locate mobile (e.g. movable) assets such as equipment and people. Wifi positioning is discussed in the paper by Liao et al. (2011) entitled: "Wifi Positioning: A survey", International Journal of Communication Networks and Distributed Systems 7(3-4):229-248. See also the paper by Z. Hao, J. Dang, W. Cai and Y. Duan, entitled "A Multi-Floor Location Method Based on Multi-Sensor and WiFi Fingerprint Fusion," in IEEE Access, vol. 8, pp. 223765-223781, 2020, doi: 10.1109/ACCESS.2020.3039394.

While cost effective, WiFi-based localization can be inaccurate, sometimes leading to reports of assets being on a different storey of a building to their true locations. Incorrect location information can hamper the workflows of care personnel in a hospital, e.g., a nurse cannot afford to waste time looking for equipment he/she needs on the wrong floor.

### SUMMARY OF THE INVENTION

Localization of assets tends to be dependent on data transmitted by tags associated with the assets. The data transmission itself is determined by the relay systems installed in the hospital, which can be in the form of Wi-Fi, infrared systems, or exciters (e.g. low frequency beacons). Infrared systems have a small radius of transmission, which leads to installation of a lot of them, which can become very costly very fast. Exciter technology is highly reliable as exciters are usually placed at choke points (possibly entry and exit on each floor in hospitals), and they transmit an address at a Very Low Frequency (VLF), normally 125-150KHz, multiple times per second. A transponder in the form of an asset tag placed on each asset will periodically wake up, listen, and receive the transmitted VLF choke point number. Once it receives this transmission, the tag is designed to transmit on an Ultra High Frequency (UHF), normally 433MHz, to a separate receiver infrastructure spread throughout the facility. That UHF receiver will in turn communicate via wire back to a central computer, which will determine the location of the asset tag. However, placing exciters is very costly, and it can go up to an estimated 50000 euros per hospital.

Wi-Fi systems are already readily available in most hospitals, but the data is not highly reliable due to the uncertainty associated with the localization, as wi-fi uses a radio-based frequencies, which can be interrupted by wireless interference.

Thus, although hospitals and other medical facilities can use WiFi-based Real-Time Locating Systems (RTLS) to locate mobile assets, WiFi-based localization can be inaccurate. Location errors can occur on not only in the X-Y plane but also on the Z axis. For example, if a tagged entity is on a particular storey (or floor) of the building, a WiFi-based localization method may report that the tagged entity is on another storey of the building. Such incorrect location information can hamper workflows of care personnel in a hospital if staff end up wasting time looking for assets on the wrong storey of a building.

As referred to herein "Floor hopping" is a phenomenon where an asset location method (e.g., such as a WiFi RTLS) reports that an asset is on a different storey of the building to its true location.

To address floor hopping, a common technique is to place exciters on the entry and exit points of all floors. Exciters are activated only if a tagged entity passes by them (this is similar to the mechanism by which devices which are placed at the entrance of shops detect and raise an alarm if an individual is leaving the premises with an unpaid item).

Thus, even if a WiFi localization method reports incorrect floor information, this can be overruled by a reading from an exciter. Exciters are, however, as noted above, comparatively expensive. Moreover, it is also known that the accuracy of WiFi-based RTLS can vary significantly from place to place, e.g., location accuracy might be good in some parts of a building while they may be poor in other areas. Thus, it can be over-engineered and unnecessarily costly to place exciters at the entry and exit points of every storey of a building in a medical setting.

It is an object of embodiments herein to improve upon this situation, and to determine improved placement of localization equipment such as exciters in a building of a medical facility.

Thus, according to a first aspect, there is a computer implemented method for use in determining locations of assets in a building of a medical setting. The method comprises: i) tracking locations of the asset in the building over time using locations obtained using a first asset location method; and ii) determining to use a second asset location method in a first region of a first storey of the building to locate the asset, if the tracked locations according to the first asset location method indicate that the asset is moving between the first storey of the building and one or more other storeys of the building at a rate higher than a first threshold rate in a second region of the first storey of the building.

According to a second aspect, there is an apparatus for use in determining locations of assets in a building of a medical setting. The apparatus comprises: a memory comprising instruction data representing a set of instructions; and a processor configured to communicate with the memory and to execute the set of instructions. The set of instructions, when executed by the processor, cause the processor to: i) track locations of the asset in the building over time using locations obtained using a first asset location method; and ii) determine to use a second asset location method in a first region of a first storey of the building to locate the asset, if the tracked locations according to the first asset location method indicate that the asset is moving between the first storey of the building and one or more other storeys of the building at a rate higher than a first threshold rate in a second region of the first storey of the building.

According to a third aspect there is a system comprising the apparatus of the second aspect. The system further comprising first equipment configured to obtain locations of assets using a first asset location method. The first equipment is configured to: obtain the locations of the assets and send the locations to the apparatus for use by the apparatus in performing steps i) and ii).

According to a fourth aspect there is a computer program product comprising a computer readable medium, the computer readable medium having computer readable code embodied therein, the computer readable code being configured such that, on execution by a suitable computer or processor, the computer or processor is caused to perform the method of the first aspect.

There is thus the provision of systems and methods for determining location(s) in a medical facility where a first asset location method may be optimally enhanced through the use of a second asset location method in order to provide cost effective asset tracking in said medical facility. This improves asset tracking, and asset usage in the medical setting, helping to ensure that clinical staff do not waste time searching for assets that are registered on an incorrect floor by the first asset location method. The floor hopping analysis process herein analyzes data from a first asset location method such as a WiFi method and takes a data-driven approach to identify areas of a building that suffer from floor hopping. This information can then be used to deploy the second asset location method (e.g., such as an exciter-based system) where it is needed in order to resolve excessive floor hopping without incurring costs associated with placing exciters on every entry and exit point on every storey of a building housing a medical facility.

It is noted that the benefits are not only in improved localization of assets, but there is also a direct benefit to the medical setting as unnecessary hardware associated with the second localization method (e.g., such as exciters) is avoided. In the exciter example, every exciter is battery powered, thus reducing/optimizing the placement of exciters also means that a hospital can save resources by not having to change/maintain as many batteries.

### BRIEF DESCRIPTION OF THE DRAWINGS

For a better understanding and to show more clearly how embodiments herein may be carried into effect, reference will now be made, by way of example only, to the accompanying drawings, in which:
Fig. 1 shows an example apparatus according to some embodiments herein;
Fig. 2 shows an example method according to some embodiments herein;
Fig. 3 shows an example graph of movement of an asset between floors of a building according to some embodiments herein;
Fig. 4 shows an example flow chart according to some embodiments herein;
Fig. 5 shows an example graph of hops per device per floor for different floors of a building;
Fig. 6 shows an example spatial distribution of devices having a rate of floor hopping above a first threshold on a particular floor of a building;
Fig. 7 shows an example output of a clustering method according to some embodiments herein; and
Fig. 8 shows example centroids of the clusters output from the cluster method for the assets shown in Fig. 6.

### DETAILED DESCRIPTION OF EMBODIMENTS

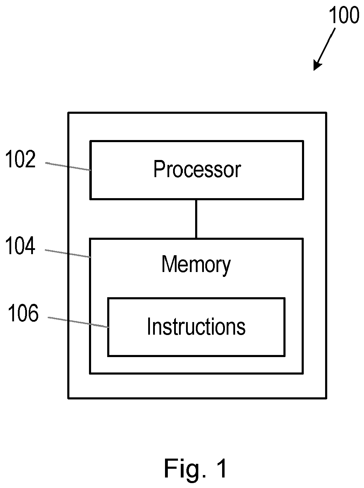

Turning now to Fig. 1 in some embodiments there is an apparatus 100 for displaying a three-dimensional volume of an image on a two-dimensional display. The apparatus may form part of specialized equipment, such as specialized medical equipment, alternatively, the apparatus may form part of a computer apparatus e.g., such as a laptop, desktop computer or other device. In other examples, the apparatus 100 may form part of the cloud/a distributed computing arrangement.

The apparatus comprises a memory 104 comprising instruction data representing a set of instructions and a processor 102 configured to communicate with the memory and to execute the set of instructions. Generally, the set of instructions, when executed by the processor, may cause the processor to perform any of the embodiments of the method 200 as described below. In some implementations, the set of instructions can comprise a plurality of software and/or hardware modules that are each configured to perform, or are for performing, individual or multiple steps of the method described herein.

More specifically, the set of instructions, when executed by the processor, cause the processor to i) track locations of the asset in the building over time using locations obtained using a first asset location method. The processor is then further caused to ii) determine to use a second asset location method in a first region of a first storey of the building to locate the asset, if the tracked locations according to the first asset location method indicate that the asset is moving between the first storey of the building and one or more other storeys of the building at a rate higher than a first threshold rate in a second region of the first storey of the building.

The processor 102 can comprise one or more processors, processing units, multi-core processors or modules that are configured or programmed to control the apparatus 100 in the manner described herein. In particular implementations, the processor 102 can comprise a plurality of software and/or hardware modules that are each configured to perform, or are for performing, individual or multiple steps of the method described herein. In some implementations, for example, the processor 102 may comprise a plurality of (for example, interoperated) processors, processing units, multi-core processors and/or modules configured for distributed processing. It will be appreciated by a person skilled in the art that such processors, processing units, multi-core processors and/or modules may be located in different locations and may perform different steps and/or different parts of a single step of the method described herein.

The memory 104 is configured to store program code that can be executed by the processor 102 to perform the method described herein. Alternatively, or in addition, one or more memories 104 may be external to (i.e., separate to or remote from) the apparatus 100. For example, one or more memories 104 may be part of another device. Memory 104 can be used to store the locations of the asset and/or any other data received, calculated, or determined by the processor 102 of the apparatus 100 or from any interfaces, memories or devices that are external to the apparatus 100. The processor 102 may be configured to control the memory 104 to store the locations of the asset, and/or any other data received, calculated or determined by the processor 102

In some embodiments, the memory 104 may comprise a plurality of sub-memories, each sub-memory being capable of storing a piece of instruction data. For example, at least one sub-memory may store instruction data representing at least one instruction of the set of instructions, while at least one other sub-memory may store instruction data representing at least one other instruction of the set of instructions.

It will be appreciated that Fig. 1 only shows the components required to illustrate this aspect of the disclosure and, in a practical implementation, the apparatus 100 may comprise additional components to those shown. For example, the apparatus 100 may comprise a battery or other power supply for powering the apparatus 100 or means for connecting the apparatus 100 to a mains power supply. As another example, the apparatus may comprise a display e.g., such as a computer screen, a screen on a mobile phone or tablet, a screen forming part of a medical equipment or medical diagnostic tool, or any other screen for displaying/rendering the locations or other information processed by the processor described herein. As another example, the apparatus may further comprise a user input, such as a keyboard, mouse or other input device that enables a user to interact with the apparatus, for example, to provide initial input parameters to be used in the method described herein.

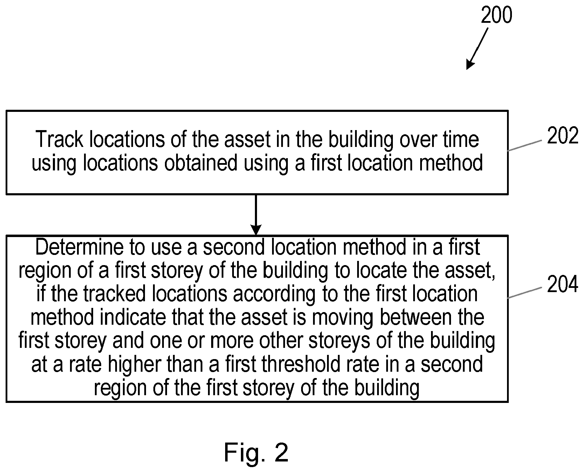

The apparatus 100 may be configured to perform the method 200 illustrated in Fig 2. The method 200 may be computer implemented. The method 200 may be for use in determining locations of assets in a building of a medical setting. Briefly, in a first step 202 the method 200 comprises i) tracking locations of the asset in the building over time using locations obtained using a first asset location method. In a second step 204, the method 200 comprises ii) determining to use a second asset location method in a first region of a first storey of the building to locate the asset, if the tracked locations according to the first asset location method indicate that the asset is moving between the first storey of the building and one or more other storeys of the building at a rate higher than a first threshold rate in a second region of the first storey of the building.

Herein, a medical setting may be a hospital, clinic, doctor's surgery, in-patient facility, out-patient facility, emergency facility, care home (e.g., for the elderly, or disabled), or any other setting in which care and/or medical procedures or treatment is provided.

The medical setting may be housed in a building. The building may have more than one storey (e.g., storey, or floor).

As used herein, an asset may be equipment used in the medical facility, for example, to provide the care and/or medical procedures and/or medical treatment. Examples of assets include, but are not limited to beds, wheelchairs, chairs, monitors, such as bedside monitors, heart rate monitors, SpO2 monitors, etc., drips, and/or any other medical equipment in the medical facility.

In other examples, an asset may be a human asset, for example, the apparatus, systems, and methods herein may be deployed to locate medical staff, for example doctors, nurses, dentists, physiotherapists, and/or any other carer(s) or medical staff in the medical facility.

In other examples, the asset may be a stationary asset, e.g. an asset that is known not to move storeys. In embodiments where the first asset location method is a Wi-Fi RTLS method, the asset may be a Wi-Fi transmitter or receiver, e.g. in the form of a Wi-Fi "tag" placed for the purpose of determining locations where Wi-Fi floor hopping artifacts occur (e.g. a stationary tag for use in the manner of a control tag). In such examples, whenever a motion between the first floor and one or more other floors is registered, this will be known to be a signal artifact (e.g. a hopping event).

In step i), the first asset location method can be any asset location method e.g., any process for locating assets, or determining estimates of the whereabouts of assets. As an example, in some embodiments, the first asset location method is a Wi-Fi method, otherwise known as a Wi-Fi real-time location system (RTLS). The skilled person will be familiar with the use of Wi-Fi location methods that use the characteristics of nearby Wi-Fi hotspots and other wireless access points to determine where a device is located. As an example, a Wi-Fi location method may use intensity of a received signal to determine distance(s) from one or more Wi-Fi access points to the asset(s) in order to triangulate or otherwise determine the asset's position. As such, the asset(s) may have attached thereto, a transmitter and/or receiver suitable for sending and/or receiving wireless signals associated with a Wi-Fi location method. A summary of various Wi-Fi location methods is given in the paper by Liao *et al.* (2011) cited in the Background section.

Wi-Fi is merely an example however, and it will be appreciated that the first asset location method may be any method suitable for determining/tracking the location of an asset over time.

In step i) the method 200 comprises tracking locations of the asset(s) in the building over time using locations obtained using the first asset location method. The method may comprise obtaining a time sequence of location estimates from equipment associated with the first asset location method. The locations may be received in response to one or more requests from the apparatus 100.

In some examples, the first asset location method may provide an estimate of the storey on which the asset is located. In other examples, the first asset location method may provide x-y-z data that may be mapped onto particular storeys of the building. In other words, the method 200 may comprise converting the tracked locations into storey data comprising an indication of the storey on which the asset is located.

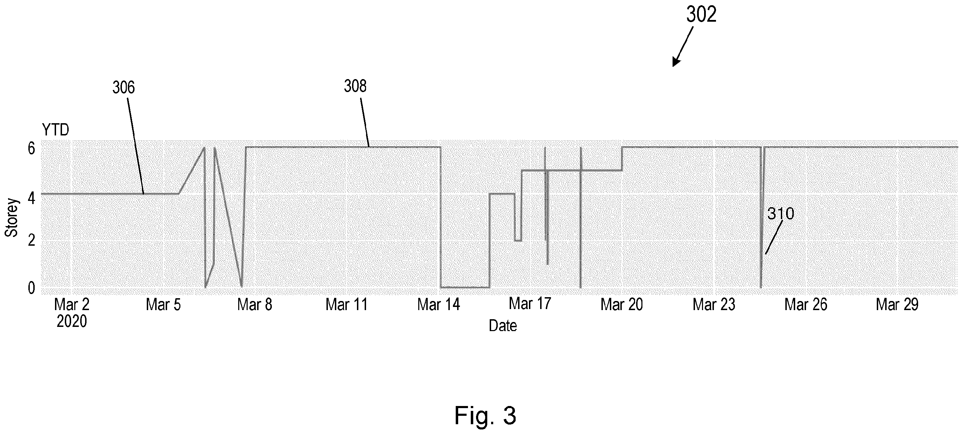

Fig. 3 shows an example graph 302 showing the temporal movement of an asset tag of an asset over time as measured using a Wi-Fi RTLS. The graph 302 shows real movement of the asset from the fourth floor at 306 to the sixth floor at 308. The graph also shows a floor-hopping artifact 310 where the Wi-Fi registered a transient "movement" of the artifact across floors, even though the asset did not actually physically move at that time.

In step 204 the method 200 comprises determining to use a second asset location method in a first region of a first storey of the building to locate the asset, if the tracked locations according to the first asset location method indicate that the asset is moving between the first storey of the building and one or more other storeys of the building at a rate higher than a first threshold rate in a second region of the first storey of the building.

Generally, the second asset location method may be used in the same region of the building in which the first asset location method indicates that the asset is moving between the first storey of the building and one or more other storeys of the building at a rate higher than the first threshold. In other words, the first region may overlap or partially overlap the second region. However, it is also contemplated that the second asset location method may be used in a different region of the first storey of the building. For example, if floor hopping above the first threshold is detected anywhere on the first storey of the building, then exciters may be placed at the entry/exit points of said storey. In such an example the second region of the building may be any region on the first storey of the building (e.g., in which the high rate of floor hopping was detected) and the first region may be the entry/exit points of the first storey of the building.

Thus, in some embodiments, the first region comprises (e.g., is, or is in the region of) an entry point or an exit point of the first storey of the building. The method 200 may thus comprise determining to locate a location beacon at said entry point or said exit point. Put another way, step ii may comprise determining to use a tag and beacon-based asset location method at an entry or exit point of a particular floor, if it is determined that an asset (or assets) are moving between the first storey of the building and one or more other storeys of the building at a rate higher than a first threshold in a second region of the first storey of the building.

In some embodiments, the method 200 comprises determining a rate of movement of the asset between different storeys of the building. This may be determined by assessing the timeframe in which the said asset is located on different floors and working out the rate of movement in the same timeframe. In another example, it may be determined spatially, e.g., the rate of movement may be calculated for different regions of different storeys of the building by combining (e.g. averaging) the rates of movement of all the assets present in each region of a particular storey of the building in said timeframe.

In some embodiments, step i) may be repeated for a plurality of assets. In other words, the method 200 may comprise repeating step i) for a plurality of assets. In step ii) the method may then comprise determining to use the second asset location method in the first region of the first storey of the building, if the tracked locations according to the first asset location method indicate that the plurality of assets are moving between the storeys of the building at an average rate higher than the first threshold rate in the second region of the first storey of the building. Thus, an average rate of movement between storeys may be determined for the plurality of assets.

In step ii), if the locations of the asset according to the first asset location method indicate that the asset is moving between storeys, this may be due to real movement of the equipment (e.g., correct signals) or it may be due to signal artifacts (e.g., such as floor-hopping). Thus, in step ii) the first threshold is used to distinguish between these scenarios. The first threshold may be a rate of movement between floors. The first threshold may be rate of movement between floors above which the motion is more likely to be due to signal artifacts than real movement of the assets, as compared to if the rate of movement is below the first threshold.

In some examples, the first threshold may be set using a "finger printing" method. In other words, a control sample of stationary assets or asset tags may be used to set the first threshold. For example, one or more stationary assets, or asset tags may be placed in different regions of the first storey of the building, and the recorded movement according to the first asset location method (between the first storey of the building and one or more other storeys of the building) may be monitored. As the respective assets or asset tags are known to be stationary, any recorded movement is, by definition, an artifact e.g. a floor hopping event. As such, the rate of recorded "movement" or floor hopping, of stationary assets can be used to set the first threshold.

In some examples, the first threshold may be set according to a data driven approach. As an example, the Wi-Fi coordinates (X, Y) and the floor number may be used to understand the location of an asset at a current point in time. This allows creation of a floor-wise and asset-wise analysis of the location of an asset based on how long it is located on a certain floor. It also allows for visualisation of the floor hopping metric(hops/hour/device). This can give a baseline understanding on the hopping scenario of the hospital.

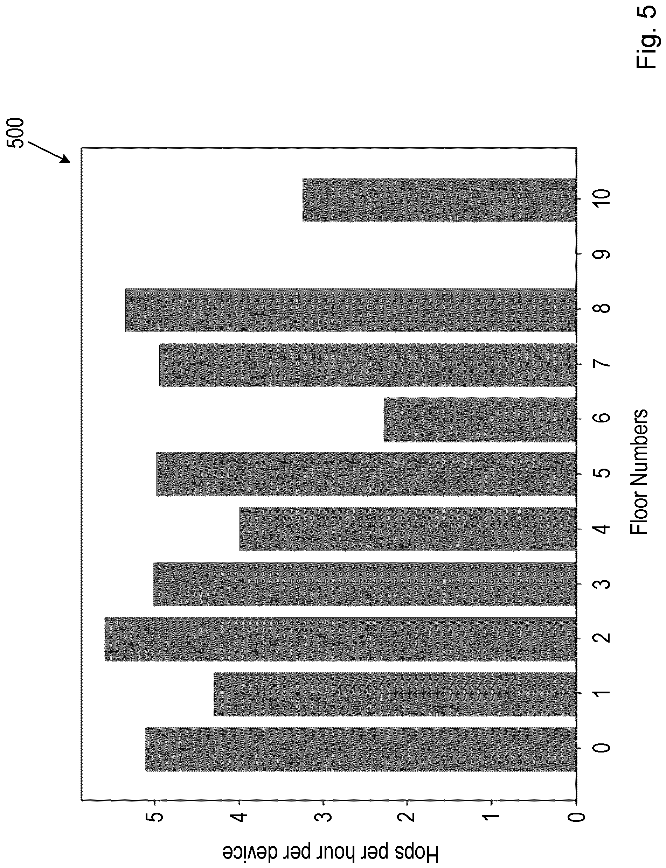

An example is shown in Fig. 5 which shows a plot 500 of floor hops per hour per asset across all storeys of a building during a 1-month period as measured using a Wi-Fi asset location method.

After the initial analysis, a threshold is selected for hopping. As an example, the first threshold could be set at 4 hops/hour/device. As such, the second asset location method might be used on a particular floor if on said floor, the average hops/hour/device is greater than 4 hops/hour/device.

In another example, the first threshold may be set, for example, based on design or budgetary requirements. For example, in embodiments where the second asset location method is an exciter-based method, the first threshold may be set in order to enable the medical setting to save x% of their budget on exciters (e.g. instead of placing exciters at every entry point to a storey, only y exciters may be used, at the top y floor hopping locations). As another example, the first threshold may be set so that no more than a predetermined number of Exiters is recommended.

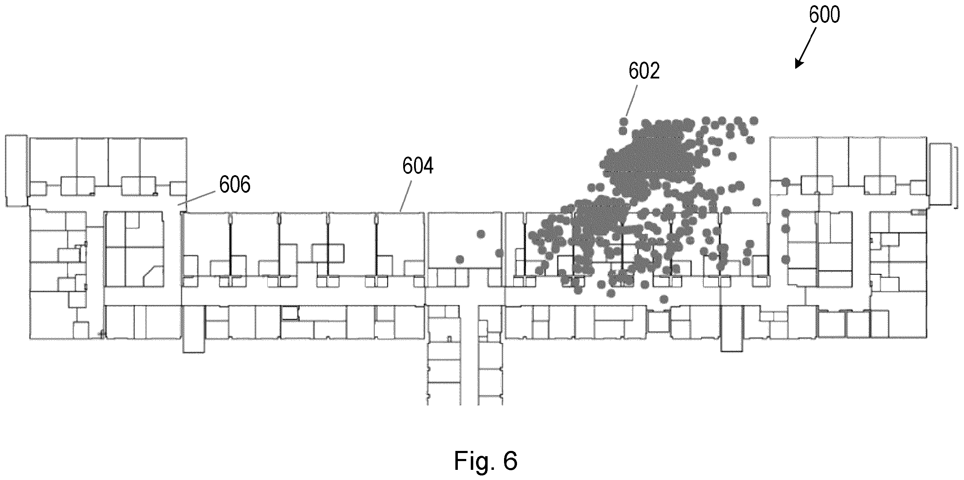

This is illustrated in Fig. 6 which shows a floor plan 600 of an example first storey of a building according to an embodiment herein. The floor plan shows rooms 604 and entry and exit points 606. The dots 602 represent location of assets that have floor-hopped (e.g. during a particular time period). Fig. 6 enables localization of hopping on each storey of a building. Initial exploration, as in Fig. 6, allows areas where the hopping is taking place on a particular floor to be located. However, getting the approximate location responsible for hopping is harder, judging from the variance shown in the plotted data.

One way to better understand locations where floor hopping is most prevalent is by clustering the points in Fig. 6 into clusters. E.g. by determining locations at which a signal artifact (e.g. floor hop) has occurred, and clustering the determined artifact locations.

Thus, generally, the method 200 may comprise determining locations at which, according to the first asset location method, assets have moved between the first storey of the building and the one or more other storeys of the building. The determined locations may then be clustered into clusters and the first region of the building in step ii) may be determined from the locations of the clusters. Put another way, the method may comprise clustering the plurality of assets that have floor-hopped during a particular time period, or that are moving between the storeys of the building at an average rate higher than the first threshold rate, into clusters according to locations of the respective floor hopping assets with respect to the storeys of the building. The method may then comprise determining the first region of the building (in which to use the second asset location method) in step ii) from the locations of the clusters.

Clustering can be used to find the centroids of clusters and to select the major clusters on a particular floor. Any clustering method may be used to cluster the points and to determine the centroids of each cluster. As an example, the Elbow method may be used. The skilled person will be familiar with the Elbow method, which is described in the paper by Humaira, Hestry & Rasyidah, Rasyidah. (2020) entitled: "Determining The Appropriate Cluster Number Using Elbow Method for K-Means Algorithm." Proceedings of the 2nd Workshop on Multidisciplinary and Applications (WMA) 2018, 24-25 January 2018, Padang, Indonesia. The Elbow Method clusters the data based on a K-means clustering algorithm and calculates the WCSS (Within Cluster Sum of Squares) error to find the optimal number of clusters from the data.

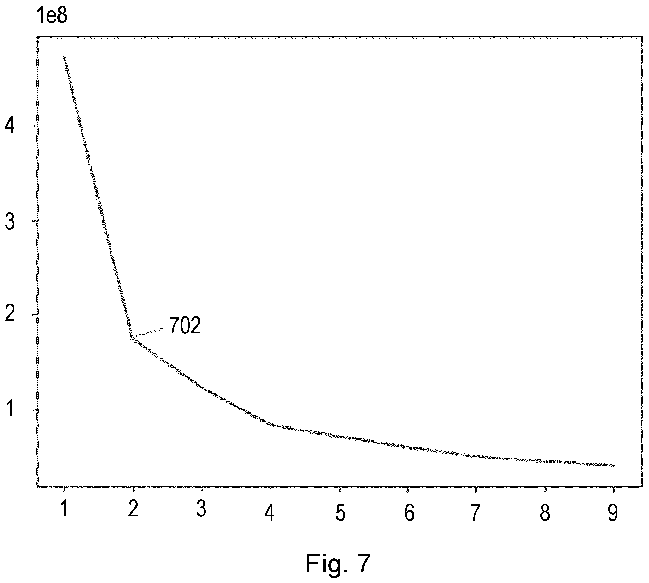

Fig. 7. illustrates the use of the Elbow clustering method on the data illustrated in Fig. 6. The Y-axis represents the WCSS (Within-Cluster Sum of Squares) when the data is clustered into different numbers of clusters, as shown on the X-axis. When the WCSS is plotted with the K-value, the plot looks like an elbow. As the number of clusters increases, the WCSS value decreases (as the points in each cluster are closer together). In Fig. 7, the WCSS value is largest when K=1 (at 702). When the graph is analysed, it can be seen that the graph rapidly changes at a particular point, thus creating an elbow shape. From this point, increasing the number of clusters no longer has a dramatic effect on the WCSS and the graph starts to move almost parallel to the X-axis. This is because dividing already tight clusters even further does not further reduce the WCSS metric. The K value corresponding to the Elbow is thus the optimal K value, or an optimal number of clusters.

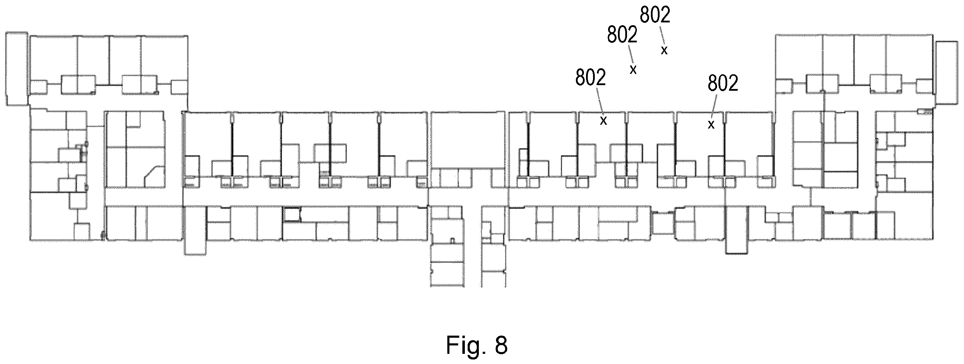

The centroids of the clusters can be found, based on the WCSS and these can be plotted as in Fig. 8 to approximate the locations of the hops. Then we calculate the cluster wise hops and remove the top-k cluster to reach the desired threshold for hopping.

Put another way, the method may further comprise identifying the clusters with highest hopping metrics, or clusters with average movement between storeys of the building at a rate higher than the first threshold rate. The top-k cluster may be removed iteratively to reach a desired threshold for hopping. Fig. 8 shows the centroids 802 of clusters of the assets shown in Fig. 6. This analysis can then be carried out across all the floors, effectively optimizing exciter placement, and reducing operational cost.

Thus, the method 200 may comprise clustering the locations at which (suspected) floorhops have occurred, and determining the first region of the building (e.g., in which to deploy the second location method) in step ii) from the locations of the clusters. For example step ii) may comprise selecting a first cluster having a rate of movement between the first storey of the building and the one or more other storeys of the building-per-asset above the first threshold rate. The method may then comprise determining the first region of the building from the location of the first cluster, for example, from the centroid of the first cluster. In some embodiments, the centroids of the clusters may correspond to the second region (or a point therein) of the first storey of the building.

Turning to step ii) of the method 200, the method may then comprise determining to use the second asset location method in a first region of the first storey. The first region may overlap with the centre of the cluster. Alternatively, as a result of a cluster being found (e.g., anywhere) on the first storey, the second asset location method may be used in a first region thereof. In such an embodiment, the first region may e.g. be an entry/exit point of the first storey of the building, "a checkpoint" at a central location of the first storey, or any other location at which an asset tag may be expected to pass if the asset really were on the first storey.

In some embodiments, the second asset location method may be an Exciter-based method. For example, the second asset location method may use low frequency location beacons that interact with tags placed on the asset to determine whether the asset is within range of the beacon.

A beacon, otherwise referred to herein as an "exciter" is a device emitting a lowfrequency (LF) signal (approximately 125 Hz). In this asset location method, assets are fitted with tags. Different exciters have distinct identifiers which are transmitted with LF signals. If a tag moves within range of an exciter (the range is configurable and may be e.g. 4, 8 or 16 feet depending on configuration) it picks up the LF signal and transmits a report (e.g. to an apparatus such as the apparatus 100) comprising an indication of an identifier associated with the exciter, obtained from the exciter's LF signal. As a result, the location of a tag near an exciter can be determined. An exciter can be configured to emit its LF signal every 250, 500 or 1000 milliseconds.

As described above, exciters can assist WiFi localization in scenarios in which there is uncertainty about the floor on which a tag is present. Indeed, this floor can be determined from the location of the exciter that the tag most recently reported.

In some embodiments, the second asset location method has a higher accuracy than the first asset location method. For example, the first asset location method may be a Wi-fi location method, and the second asset location method may be an exciter (e.g., beacon and tag) location-based method, or an IR-based location method as described above. In this way, the method 200 may be used to determine where to use a second, more accurate, asset location method.

In some examples, the second asset location method may be more expensive, e.g. either computationally or in monetary value, to install, use or maintain. In such examples, the method 200 may be used to determine where such an asset location method may be most advantageously used, and correspondingly where in the medical facility the first (cheaper) asset location method is adequate. In this way, an optimal combination of asset location methods may be determined for a particular medical facility.

As such, in embodiments where the first asset location mechanism is a Wi-Fi RTLS and the second asset location mechanism is a tag and beacon-based asset location mechanism, the method 200 may facilitate identification of areas of a building that suffer from the floor-hopping phenomena associated with WiFi based asset location methods. This information can then be used by the business to only deploy exciters where they are needed to resolve excessive floor hopping in a cost-effective manner (e.g., without resorting to deploying exciters at every entry and/ exit point on every storey of the building).

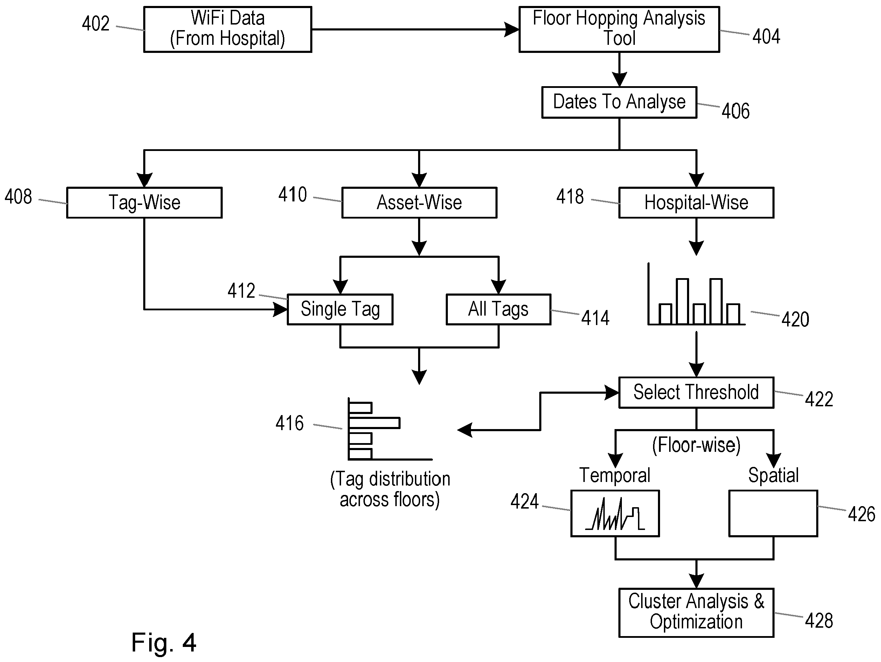

Some of the steps described above are summarised in Fig. 4. In this embodiment the first asset location method is a Wi-Fi method, and the second asset location method is an Exciter-based method using beacons and tags as described above. It will be appreciated however that the method in Fig. 4 applies equally to other asset location methods.

In step 402, Wi-Fi data is obtained from a medical setting. In this example the medical setting is a hospital. A floor hopping analysis module 404 is then used to analyse the data in the following manner:
The data is filtered to obtain a particular date range of interest in block 406. The data is then further split according to asset tag 408, asset 410 and/or into individual hospital(s) 418. A plot of asset distribution per storey, per hospital 420 can then be made, in a similar manner to that illustrated in Fig. 5. As another example, if the data is split according to tags, or assets (in step 408 or 410), then the hopping profile of each tag may be considered individually (in step 412) or the average hopping rate of a group of assets may be considered (as in step 414). Either of these may be plotted in 416.

Such a plot may be used to select a floor hops/device/hour threshold 422 that can be used to select particular storeys of the building where the first asset location method (Wi-Fi method) is resulting in the floor-hopping data artifact. The remaining data may be split temporally 424 and spatially 426. Clusters may then be determined according to the spatial information, e.g., according to the Elbow method above, in order to determine the centroids of assets with hopping rates higher than the first threshold rate. The locations of these centroids may be used as basis in which to determine first regions of the hospital in which the second asset location method, which in this embodiment is an exciter and tagbased method should be employed.

Turning now, back to Fig. 2 and the method 200, following steps i) and ii), the outputs of the method may be displayed. For example, the method 200 may further comprise instructing a display to display one or more of the temporal and/or spatial distributions of an asset or assets that are moving between storeys of the building at a rate higher than a first threshold rate. This may indicate to a user the areas in which it may be more beneficial to use the second asset location method.

In some embodiments, the method 200 may further comprise one or more of the following options: initiating installation of hardware in the building in order to implement the second asset location method in the first region of the building; initiating the activation of the second asset location method in the first region of the building; tracking one or more other assets in the first region of the first storey of the building using the second asset location method; and correcting a first location estimate of a first asset obtained using the first asset location method, using a second location estimate of the first asset obtained using the second asset location method, in the first region of the building.

As noted briefly above, the apparatus 100 may also be part of a system. For example, in some embodiments, there is a system comprising the apparatus 100 and first equipment configured to obtain locations of assets using a first asset location method. In such embodiments, the first equipment is configured to obtain the locations of the assets and send the locations to the apparatus for use by the apparatus in performing steps i) and ii) of the method 200.

In embodiments where the first asset location method is a Wi-Fi localization method, examples of the first equipment include but are not limited to Wi-Fi routers, Wi-Fi repeaters and any other equipment capable of providing locations of assets using a Wi-Fi location method. In an example where the first method uses exciters e.g. beacons, then the first equipment may be any equipment that might be used to implement the method, for example, an exciter.

In another embodiment, there is provided a computer program product comprising a computer readable medium, the computer readable medium having computer readable code embodied therein, the computer readable code being configured such that, on execution by a suitable computer or processor, the computer or processor is caused to perform the method or methods described herein.

Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computerexecutable instructions, for example, processor instructions and/or interpreter instructions (e.g. Java interpreter instructions). Alternatively, one or more or all of the sub-routines may be stored in at least one external library file and linked with a main program either statically or dynamically, e.g., at run-time. The main program contains at least one call to at least one of the sub-routines. The sub-routines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer implemented method for use in determining locations of assets in a building of a medical setting, the method comprising:
i) tracking locations of the asset in the building over time using locations obtained using a first asset location method; and
ii) determining to use a second asset location method in a first region of a first storey of the building to locate the asset, if the tracked locations according to the first asset location method indicate that the asset is moving between the first storey of the building and one or more other storeys of the building at a rate higher than a first threshold rate in a second region of the first storey of the building.

2. A method as in claim 1 wherein the second asset location method has a higher accuracy than the first asset location method.

3. A method as in claim 1 or 2 wherein the first asset location method is a WiFi real-time location system, RTLS.

4. A method as in claim 1, 2, or 3 wherein the second asset location method uses low frequency location beacons that interact with tags placed on the asset to determine whether the asset is within range of the beacon.

5. A method as in claim 4 wherein the first region comprises an entry point or an exit point of the first storey of the building, and wherein the method comprises determining to locate a location beacon at said entry point or said exit point.

6. A method as in any one of the preceding claims comprising repeating step i) for a plurality of assets; and
wherein in step ii) the method comprises determining to use the second asset location method in the first region of the first storey of the building, if the tracked locations according to the first asset location method indicate that the plurality of assets are moving between the first storey of the building and one or more other storeys of the building at an average rate higher than the first threshold rate in the second region of the first storey of the building.

7. A method as in claim 6 wherein in step ii) the method comprises:
determining locations at which, according to the first asset location method, the assets have moved between the first storey of the building and the one or more other storeys of the building;
clustering the determined locations into clusters; and
determining the first region of the building in step ii) from the locations of the clusters.

8. A method as in claim 7 wherein step ii) comprises selecting a first cluster having a rate of movement between the first storey of the building and the one or more other storeys of the building-per-asset above the first threshold rate; and
determining the first region of the building from the location of the first cluster.

9. A method as in claim 8 comprising determining the first region of the building from a location of a centroid of the first cluster.

10. A method as in claim 7, 8 or 9 wherein the clustering is performed using the Elbow clustering method.

11. A method as in any one of the preceding claims further comprising one or more of the following options:
- initiating installation of hardware in the building in order to implement the second asset location method in the first region of the building;
- initiating the activation of the second asset location method in the first region of the building;
- tracking one or more other assets in the first region of the first storey of the building using the second asset location method; and
- correcting a first location estimate of a first asset obtained using the first asset location method, using a second location estimate of the first asset obtained using the second asset location method, in the first region of the building.

12. An apparatus for use in determining locations of assets in a building of a medical setting, the apparatus comprising:
a memory comprising instruction data representing a set of instructions; and
a processor configured to communicate with the memory and to execute the set of instructions, wherein the set of instructions, when executed by the processor, cause the processor to:
i) track locations of the asset in the building over time using locations obtained using a first asset location method; and
ii) determine to use a second asset location method in a first region of a first storey of the building to locate the asset, if the tracked locations according to the first asset location method indicate that the asset is moving between the first storey of the building and one or more other storeys of the building at a rate higher than a first threshold rate in a second region of the first storey of the building.

13. An apparatus as in claim 12 wherein the second asset location method has a higher accuracy than the first asset location method.

14. A system comprising the apparatus of claim 12 and first equipment configured to obtain locations of assets using a first asset location method; wherein the first equipment is configured to:
- obtain the locations of the assets; and
- send the locations to the apparatus for use by the apparatus in performing steps i) and ii).

15. A computer program product comprising a computer readable medium, the computer readable medium having computer readable code embodied therein, the computer readable code being configured such that, on execution by a suitable computer or processor, the computer or processor is caused to perform the method as claimed in any one of claims 1 to 11.
